# EUROPEAN PATENT APPLICATION

(11) **EP 4 011 482 A1**
(43) Date of publication of application: **15.06.2022**
(21) Application number: 20213941.6
(22) Date of filing: 14.12.2020
(51) Int. Cl.: B01D 53/00, B01D 27/08, B01D 53/26, B01D 27/00

(54) **DESICCANT CONTAINER, AIR DRYER CARTRIDGE, AIR TREATMENT DEVICE, AND METHOD OF MANUFACTURING OF A DESICCANT CONTAINER**

(71) Applicant: KNORR-BREMSE Systeme für Nutzfahrzeuge GmbH, 80809 München (DE)
(72) Inventor: Olàh, Tibor, 6000 Kecskemét (HU); Tóth, Zoltán László, 6100 Kiskunfélegyháza (HU); Tormási, Zoltán, 6000 Kecskemét (HU)
(74) Representative: DTS Patent- und Rechtsanwälte Schnekenbühl und Partner mbB

(57) **Abstract**

The present invention relates to a desiccant container (10) for an air dryer cartridge (12) for a vehicle, especially utility vehicle, with at least one container housing (10a) and with at least one container cover (14), wherein, in a mounted state, at least one accommodation volume (16) for accommodating a desiccant (18) is formed by the container housing (10a) and the container cover (14), and wherein the container housing (10a) and the container cover (14) are connected to each other by at least one, especially integral, material connection (20).

The present invention further relates to an air dryer cartridge for an air treatment device for a vehicle, especially utility vehicle, with at least one desiccant container (10) as mentioned above and relates to an air treatment device for a vehicle, especially utility vehicle, with at least one desiccant container (10) and with at least one air dryer cartridge as mentioned above, respectively.

Further, the present invention relates to a method for manufacturing at least one desiccant container (10) for an air dryer cartridge (12) for a vehicle, especially utility vehicle, as mentioned above.

## Description

The present invention relates to a desiccant container for an air dryer cartridge for a vehicle, especially utility vehicle, with at least one container housing and with at least one container cover, wherein, in a mounted state, at least one accommodation volume for accommodating a desiccant is formed by the container housing and the container cover.

Further, the present invention relates to an air dryer cartridge for an air treatment device for a vehicle, especially utility vehicle, with at least one desiccant container as mentioned above, and relates to an air treatment device for a vehicle, especially utility vehicle, with at least one desiccant container as well as with at least one air dryer cartridge as mentioned above, respectively.

Additionally, the present invention relates to a method of manufacturing of the desiccant container as mentioned above.

In the field of vehicles and especially utility vehicles, usually pneumatic systems are used for brakes, suspension and other auxiliary systems. The distribution of the air is handled by a multi-circuit protection valve that can divide the air provided by a compressor or the like, handle the different opening and closing pressures and the pressure limitation of each circuits together with a circuit protection.

Before the pressurized air may be controlled or managed this way, an important measure is to dry this air (as it still contains humidity of the atmosphere) provided by the compressor. This drying procedure is established by a desiccant container included within an air dryer cartridge being arranged between the compressor and the multi-circuit protection valve and providing dried and de-oiled air to the multi-circuit protection valve.

Such conventional desiccant containers and air dryer cartridges are already known in the prior art.

DE 3208561 A1 shows an air-drying device having a connection housing on which a cap-shaped container is mounted, which accommodates a drying agent cartridge. For ease of changing the drying agent cartridge, a clamping bracket is used, which is swivellably mounted on the housing and can be swivelled over the container and fixed there.

DE 69210614 T2 discloses an air dryer control system in which the compressed air output of a compressor is dried by one of two air dryers connected in parallel. The purging and drying cycles of the air dryers are alternated by a timing and relay device.

EP 0933117 A1 discloses a shuttle valve for a gas drying system that cleans and dries a stream of unpurified pressurized gas received from a source thereof and supplied to a pneumatic system that uses such a purified pressurized air. The valve includes a housing that connects a drying assembly to a structure that conveys the unpurified pressurized air to the drying assembly.

US 5901464 A relates to a twin tower air drying system for cleaning and drying a stream of unpurified pressurized air including a centrifugal separator having a baffle horizontally disposed therein to generally separate the centrifugal chamber into an upper sub-chamber and a lower sub-chamber; a pair of cavities each containing desiccant media and a purge tube with a flapper valve thereover to close and restrict flow of air through the purge tube when air is flowing upwardly through the cavity, and to open and promote air flow through the purge tube when air is flowing downwardly through the cavity.

US 5961698 A discloses a twin tower gas drying system for cleaning and drying a stream of unpurified pressurized gas received from a source thereof for use of a pneumatic system. The drying system includes a manifold block provided with the plurality of ports. A separator and sump are connected to such a block and to one of the ports for initially separating moisture and particulates from such stream of unpurified gas, and for directing the remainder of the stream to the one port in the block.

Basically, the desiccant of all air dryer cartridges needs to be pretensioned as, during the lifetime of the air dryer cartridge, vibrations caused by the powertrain and the operation of the vehicle generate wear and friction of the desiccant formed by multiple desiccant beads or balls staying in contact to each other. The mentioned vibrations cause friction, abrasion, wear, and powdering of the desiccant beads resulting in an overall volume loss of the desiccant (over a sufficient period of time) that has to be compensated by a tension or pressing force in order to generate stable desiccant conditions of the desiccant. According to the prior art, the desiccant pretension is working as follows: a desiccant cover is pushed downwards against the desiccant with its hole contacting surface by a compression spring supported by the air dryer housing and pressed against it. All of the desiccant beads were pushed downwards by the desiccant cover (compensation of the abrasion loss) in one pretension direction.

This solution requires a large number of the components and place. Further, a relatively high spring force is needed in order to push the whole area of the desiccant cover downwards in order to contact the desiccant. As a consequence, mechanical stress in the affected parts is increased and usually a bayonet connection between the container cover and the container main body or housing is used to handle the relatively high spring force.

It is therefore an object of the present invention to improve a desiccant container and an air dryer cartridge as mentioned above, in particular in that they are built up with less parts, weight, and building space and/or in that the overall design is simplified.

This object is solved according to the present invention with a desiccant container according to the features of claim 1. Correspondingly, a desiccant container for an air dryer cartridge for a vehicle, especially utility vehicle, is provided with at least one container housing and with at least one container cover, wherein, in a mounted state, at least one accommodation volume for accommodating a desiccant is formed by the container housing and the container cover, and wherein the container housing and the container cover are connected to each other by at least one, especially integral, material connection.

The invention is based on the basic idea that the current solution of connecting the container cover to the container main body or container housing, by providing a bayonet connection (according to the prior art), is replaced by a material connection. This approach is based on a smaller pretension area of the desiccant container cover resulting in less mechanical tensions such that the connection between the container cover and the container housing may be simplified as an alternative for the bayonet connection, for example by the material connection. In general, there a three basic connection types alone or in combination how to connect at least two separate construction parts to each other. The first connection type is a form-fit, wherein the second one is a force- or friction-fit and the third one is the material connection as mentioned above. The solution according to the prior art is based on a bayonet connection that is mainly based on a from-fit. The solution according to the invention now constitutes an integral material connection such that the container cover and the container housing, once they are connected this way, may be separated again merely by destruction. The new solution also provides a simplification of the cover and housing connection as well as a proper fixing and the provision of less parts.

Additionally, the material connection is formed by at least one welded connection. Weld connections provide a very strong connection on the one hand. On the other hand, such welded connections may be separated merely by destruction such that an unintended exchange of the desiccant itself (that is without the desiccant container) may be prevented. Also, a unique desiccant container design may be provided that clearly differs from solutions of other producers such that less mistakes resulting from unintended mounting or maintenance occur and an easy competitor distinction may be reached. Alternative material connections such as adhesive bonding or brazing are additionally conceivable.

Besides, the welded connection is formed by at least one ultrasonic welded connection. Basically, the container housing and the container cover are made of plastic material for which ultrasonic welding is very advantageous. Ultrasonic welding is a very reliable, fast and cheap welding technique on the one hand. Further, ultrasonic welding provides less warping of the parts to be connected resulting in less mechanical tensions in the container housing and the container cover. Also, a very stable connection is provided.

Moreover, the welded connection is formed by at least one welded annular connection. As the container housing as a main container body and the container cover are formed as parts with a substantially circular cross section, an annular-shaped weld connection is most advantageous for such geometries. To this end, the container housing is formed like a pot, wherein the container cover is formed like a dome. Further, the welded connection is formed at a radially outermost region of the container housing and the container cover, respectively.

Further, the welded annular connection is formed by a plurality of welded annular sections. As the welded annular connection is divided into several welded annular sections, the welding effort as well as the material effort decreases. Further, the manufacturing time of the desiccant container may be accelerated together with a decreased construction space and weight.

On the other hand, the container housing and the container cover are connected to each other by at least one annular connection region, wherein a plurality of air inlet flow channels are arranged at the annular connection region. According to the prior art, a bayonet connection is arranged at the annular connection region such that a plurality of inlet flow channels may not be positioned in such a region. Therefore, this design according to the invention increases the effective inlet flow area of the container cover such that the overall flow resistance decreases resulting in a more efficient desiccant container. On the other hand, the increase of the overall inlet flow area together with a reduction of the overall building space of the desiccant container results in an even more effective container. The inlet flow channels are formed as slots extending in annular sections.

In addition, the plurality of welded annular sections and/or the air inlet flow channels are arranged radially symmetrically with regard to a longitudinal axis of the container cover and/or the container housing. This design increases an overall stiffness of the desiccant container while simultaneously the mechanical tensions within the container housing and the container cover may be reduced. Due to the stiffer design, less material may be needed resulting in a desiccant container, which has less weight, construction space and material effort. Preferably, the plurality of welded annular sections and the air inlet flow channels are arranged radially symmetrically with regard to a longitudinal axis of the container cover and the container housing.

Especially, the container cover comprises a plurality of cover rips being arranged radially symmetrically with regard to a longitudinal axis of the container cover and/or the container housing. This design further increases the overall stiffness of the container cover while simultaneously the mechanical tensions within the cover body may be reduced. Due to the stiffer design, less material may be needed resulting in a container cover having less weight, construction space and material effort.

Furthermore, the present invention also relates to an air dryer cartridge for an air treatment device for a vehicle, especially utility vehicle, with at least one desiccant container as mentioned above. The advantages and technical teachings as discussed with regard to the desiccant container and its embodiments as mentioned above, which is a sub-unit of the air dryer cartridge, are also transferable to the air dryer cartridge and its embodiments accordingly.

Additionally, the present invention relates to an air treatment device for a vehicle, especially utility vehicle, with at least one desiccant container as mentioned above and with at least one air dryer cartridge as mentioned above. The advantages and technical teachings as discussed above with regard to the desiccant container and the air dryer cartridge together with their embodiments, which are sub-units of the air treatment device, are also transferable to the air treatment device and its embodiments accordingly.

According to the invention, additionally a method for manufacturing at least one desiccant container for an air dryer cartridge for a vehicle, especially utility vehicle, is provided, comprising the following steps:
- providing at least one container housing of the desiccant container;
- providing at least one container cover of the desiccant container, wherein, in a mounted state, at least one accommodation volume for accommodating a desiccant is formed by the container housing and the container cover; and
- connecting the container housing and the container cover to each other by at least one, especially integral, material connection.

The advantages and technical teachings as discussed above with regard to the desiccant container and its embodiments are also transferable to the method for manufacturing at least one desiccant container and its embodiments accordingly.

Consequently, the method may be established by forming the material connection by at least one welded connection.

Further, the method may be established by forming the welded connection by at least one ultrasonic welded connection.

Alternatively or additionally, the method may be established by forming the welded connection by at least one welded annular connection.

Further details and advantages of the present invention shall now be disclosed in an embodiment according to the invention in connection with the drawings.

It is shown in
- Fig. 1: a schematic perspective view of an embodiment of a desiccant container according to the invention for an air treatment device of a vehicle; and
- Fig. 2: schematic view of sequence of steps of an embodiment of an inventive method of manufacturing the desiccant container of Fig. 1.

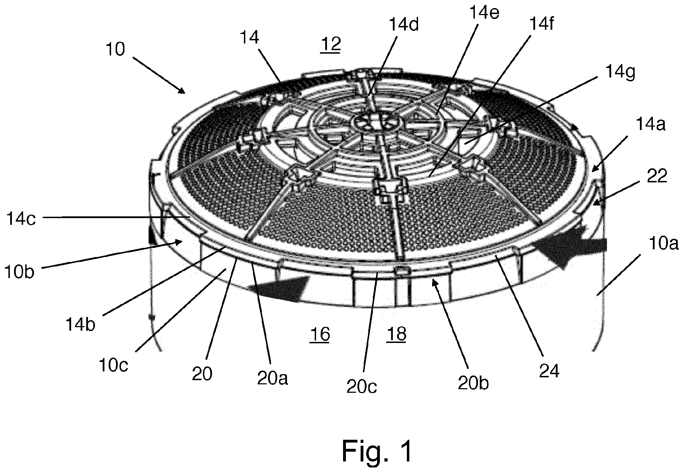

**Fig. 1** shows a schematic perspective view of an embodiment of a desiccant container 10 according to the invention for an air treatment device of a vehicle (both not shown).

The desiccant container 10 is established for an air dryer cartridge 12 for a vehicle that is formed as an utility vehicle.

The desiccant container 10 comprises a container housing 10a and a container cover 14.

The container housing 10a forms a main body of the desiccant container 10.

Further, the container housing 10a is formed as a pot comprising a circular cross section and comprising, in a pre-mounted state, at least one container opening that is closed by the container cover 14 in a mounted state.

The container cover 14 is substantially formed as a dome.

According to Fig. 1, the container housing 10a and the container cover 14 form, in the mounted state, an accommodation volume 16 for accommodating a desiccant 18.

The desiccant 18 is formed by multiple loose desiccant beads (number of hundreds, thousands, ten thousands etc.) that are hold in space properly by the desiccant container 10.

Due to the sufficiently small bead size (average bead diameter is ca. 1 mm to ca. 5 mm or to ca. 10 mm), the desiccant 18 has quasi-fluid characteristics.

The container housing 10a and the container cover 14 are connected to each other by a material connection 20.

Especially, this material connection 20 may be formed as an integral material connection.

Further, the material connection 20 is formed by at least one welded connection 20a.

Alternatively or additionally, the material connection 20 may be also formed by at least one brazing connection or glue connection.

The welded connection 20a, in turn, is formed by an ultrasonic welded connection.

Especially, other welded connections like high frequency welding, circular welding, rotary friction welding, or vibration welding are also conceivable in this regard.

As can be depicted by Fig. 1, the welded connection 20a is formed by a welded annular connection 20b.

The container cover 14 and the container housing 10a are connected to each other at an annular connection region 22.

This connection region 22 is located at a top region 10b of the container housing 10a and at an outermost diameter region 14a of the container cover 14.

The welded annular-shaped connection 20b is formed by a plurality of welded annular sections 20c being tangentially separated from each other at the annular connection region 22.

The welded annular sections 20c are formed by radial protrusions 14b radially protruding from the outermost diameter region 14a of the container cover 14 that forms a connection ring 14c at this outermost diameter region 14a.

Additionally, these radial protrusions 14b are aligned with corresponding support and connection sections 10c having the same tangential and radial arrangement as the radial protrusions 14b at the annular connection region 22.

The radial support and connection sections 10c, in the mounted state, also protruding radially from an outer surface of the container housing 10a at the top region 10b of the container housing 10a.

Thus, the radial support and connection sections 10c together with the radial protrusions 14b form the welded annular sections 20c in an aligned and mounted state at which the welded connection 20a between the container cover 14 and container housing 10a is established.

Further, the annular connection region 22 comprises a plurality of air inlet flow channels 24.

The air inlet flow channels 24 are formed as inlet slots and they are tangentially arranged between the radial support and connection sections 10c and the radial protrusions 14b of the container cover 14, i.e. between the welded annular sections 20c.

The plurality of welded annular sections 20c and the air inlet flow channels 24 are arranged radially symmetrically with regard to a longitudinal axis of the container cover 14 and the container housing 10a.

The container cover 14 further comprises a plurality of cover rips 14d being also arranged radially symmetrically with regard to a longitudinal axis of the container cover and the container housing.

These cover rips 14d extend in a star-shaped radial manner from the central point of the container cover 14 to the welded annular sections 20c.

That is, the number of cover rips 14d correspond to the number of welded annular sections 20c.

These cover rips 14d radially terminate at the radial origin of the welded annular sections 20c and terminate there at a tangential central point of these welded annular sections 20c.

The cover rips 14d are integrally connected by an inner cover stiffening ring 14e and an outer cover stiffening ring 14f being coaxially arranged to each other.

The inner and outer cover stiffening ring 14e, 14f together with the cover rips 14d each form cover inlet slot sections 14g for guiding pressurized air from the container cover 14 into the desiccant 18.

Radially between the outer cover stiffening ring 14g and the connection region 22, there is arranged a plurality of cover inlet flow holes 14g for guiding pressurized air from the container cover 14 into the desiccant 18.

These plurality of cover inlet flow holes 14g are tangentially separated from each other by the cover rips 14d.

Furthermore, the present invention also relates to the air dryer cartridge 12 as mentioned above for an air treatment device (not shown in Fig. 1) for a utility vehicle comprising such a desiccant container 10 as mentioned above. The advantages and technical teachings as discussed with regard to the desiccant container 10 and its embodiments as mentioned above, which is a sub-unit of the air dryer cartridge 12, are also transferable to the air dryer cartridge 12 and its embodiments accordingly.

Additionally, the present invention also relates to an air treatment device (not shown in Fig. 1) for a utility vehicle comprising such a desiccant container 10 as mentioned above and comprising such an air dryer cartridge 12 as mentioned above. The advantages and technical teachings as discussed with regard to the desiccant container and the air dryer cartridge together with its embodiments as mentioned above, which are sub-units of the air treatment device, are also transferable to the air treatment device and its embodiments accordingly.

The arrows and/or arrow parts that are not associated with a reference sign do not have any contribution to the subject-matter of the desiccant container 10, the air dryer cartridge 12 and the air treatment device according to the present invention, respectively.

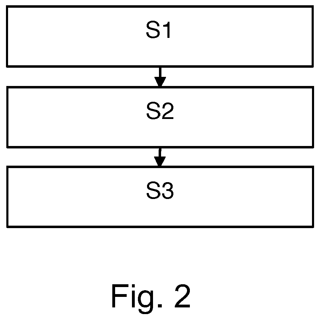

**Fig. 2** shows a schematic view of a sequence of multiple steps of an embodiment of an inventive method of manufacturing the desiccant container of Fig. 1.

The method for manufacturing a desiccant container 10 for an air dryer cartridge 12 as mentioned above for a utility vehicle comprising the following steps:
According to a first Step S1, a container housing 10a of the desiccant container 10 is provided.

According to a second step S2, a container cover 14 of the desiccant container 10 is provided.

Besides, in a mounted state, the container housing 10a and the container cover 14 form an accommodation volume 16 for accommodating a desiccant 18.

According to a third step S3, the container housing 10a and the container cover 14 are connected to each other by a material connection 20.

The material connection 20 especially may by formed as an integral material connection.

Further, the material connection 20 may be formed by a welded connection 20a, wherein the welded connection 20a may be formed by an ultrasonic welded connection.

Additionally, the welded connection 20a may be formed by a welded and annular-shaped connection.

### REFERENCE SIGNS

- 10: desiccant container
- 10a: container housing
- 10b: top region of the container housing
- 10c: radial support and connection sections
- 12: dryer cartridge
- 14: container cover
- 14a: outermost diameter region
- 14b: radial protrusions
- 14c: connection ring
- 14d: cover rips
- 14e: inner cover stiffening ring
- 14f: outer cover stiffening ring
- 14g: cover inlet flow slot sections
- 16: accommodation volume
- 18: desiccant
- 20: material connection
- 20a: welded connection
- 20b: welded annular connection
- 20c: welded annular sections
- 22: connection region
- 24: air inlet flow channels

- S1: first step
- S2: second step
- S3: third step

## Claims

1. A desiccant container (10) for an air dryer cartridge (12) for a vehicle, especially utility vehicle, with at least one container housing (10a) and with at least one container cover (14), wherein, in a mounted state, at least one accommodation volume (16) for accommodating a desiccant (18) is formed by the container housing (10a) and the container cover (14), and wherein the container housing (10a) and the container cover (14) are connected to each other by at least one, especially integral, material connection (20).

2. The desiccant container (10) according to claim 1,
**characterized in that**
the material connection (20) is formed by at least one welded connection (20a).

3. The desiccant container (10) according to claim 2,
**characterized in that**
the welded connection (20a) is formed by at least one ultrasonic welded connection.

4. The desiccant container (10) according to claim 2 or claim 3,
**characterized in that**
the welded connection (20a) is formed by at least one welded annular connection (20b).

5. The desiccant container (10) according to claim 4,
**characterized in that**
the welded annular connection (20b) is formed by a plurality of welded annular sections (20c).

6. The desiccant container (10) according to one of the preceding claims,
**characterized in that**
the container housing (10a) and the container cover (14) are connected to each other by at least one annular connection region (22), wherein a plurality of air inlet flow channels (24) are arranged at the annular connection region (22).

7. The desiccant container (10) according to claim 5 or claim 6,
**characterized in that**
the plurality of welded annular sections (20c) and/or the air inlet flow channels (24) are arranged radially symmetrically with regard to a longitudinal axis of the container cover (14) and/or the container housing (10a).

8. The desiccant container (10) according to one of the preceding claims,
**characterized in that**
the container cover (14) comprises a plurality of cover rips (14d) being arranged radially symmetrically with regard to a longitudinal axis of the container cover (14) and/or the container housing (10a).

9. An air dryer cartridge (12) for an air treatment device for a vehicle, especially utility vehicle, with at least one desiccant container (10) according to one of the preceding claims.

10. An air treatment device for a vehicle, especially utility vehicle, with at least one desiccant container (10) according to one of the preceding claims 1 to 8 and with at least one air dryer cartridge (12) according to claim 9.

11. Method for manufacturing at least one desiccant container (10) for an air dryer cartridge (12) for a vehicle, especially utility vehicle, comprising the following steps:
- providing at least one container housing (10a) of the desiccant container (10);
- providing at least one container cover (14) of the desiccant container (10), wherein, in a mounted state, at least one accommodation volume (16) for accommodating a desiccant (18) is formed by the container housing (10a) and the container cover (14); and
- connecting the container housing (10a) and the container cover (14) to each other by at least one, especially integral, material connection (20).

12. Method according to claim 11,
**characterized by**
forming the material connection (20) by at least one welded connection (20a).

13. Method according to claim 12,
**characterized by**
forming the welded connection (20a) by at least one ultrasonic welded connection.

14. Method according to claim 12 or claim 13,
**characterized by**
forming the welded connection (20a) by at least one welded annular connection (20b).
